# EUROPÄISCHE PATENTSCHRIFT

(11) **EP 1 761 377 B1**
(45) Veröffentlichungstag und Bekanntmachung des Hinweises auf die Patenterteilung: **17.09.2008**
(21) Anmeldenummer: 05753023.0
(22) Anmeldetag: 15.06.2005
(51) Int. Cl.: B29C 49/70

(54) **BLASFORMWERKZEUGANORDNUNG MIT AUSWERFERN FÜR EINE EXTRUSIONSBLASMASCHINE ZUR HERSTELLUNG VON KUNSTSTOFFBEHÄLTERN**
BLOW-MOULD ARRANGEMENT COMPRISING EJECTORS, FOR AN EXTRUSION-BLOW MOULDER FOR PRODUCING PLASTIC CONTAINERS
ENSEMBLE MOULE DE SOUFFLAGE A EJECTEURS POUR UNE MACHINE D'EXTRUSION-SOUFFLAGE SERVANT A PRODUIRE DES CONTENANTS EN PLASTIQUE

(30) Priorität: 28.06.2004 CH 108504
(43) Veröffentlichungstag der Anmeldung: 14.03.2007
(73) Patentinhaber: Alpla-Werke Alwin Lehner GmbH und Co.KG, 6971 Hard (AT)
(72) Erfinder: KÜNZ, Johann, A-6971 Hard (AT)
(74) Vertreter: Hasler, Erich
(86) Internationale Anmeldenummer: PCT/EP2005/006429
(87) Internationale Veröffentlichungsnummer: WO 2006/000328

(56) Entgegenhaltungen:
- EP-A- 0 633 123
- US-A- 5 372 495
- US-B1- 6 171 542
- PATENT ABSTRACTS OF JAPAN Bd. 1997, Nr. 07, 31. Juli 1997 (1997-07-31) -& JP 09 058645 A (KUREHA PLAST KK), 4. März 1997 (1997-03-04)

## Beschreibung

Die Erfindung betrifft eine Blasformwerkzeuganordnung für eine Extrusionsblasmaschine für Kunststoffbehälter, insbesondere für Kunststoffflaschen, gemäss dem Oberbegriff des Patentanspruchs 1.

Die in der Vergangenheit üblichen Behältnisse aus Weiss- oder Buntblech, aus Glas oder auch aus Keramik werden in zunehmendem Masse von Behältnissen aus Kunststoff abgelöst. Insbesondere für die Verpackung fluider Substanzen, beispielsweise von Getränken, Öl, Reinigungsutensilien, Kosmetika usw., kommen hauptsächlich Kunststoffbehältnisse zum Einsatz. Das geringe Gewicht und die geringeren Kosten spielen sicher eine nicht unerheblich Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Die Herstellung von Kunststoffbehältnissen, insbesondere Kunststoffflaschen, beispielsweise aus Polyethylen oder Polypropylen, erfolgt hauptsächlich in einem Extrusionsblasverfahren, insbesondere in einem Schlauchblasverfahren. Dabei wird von einem Extruderkopf ein Kunststoffschlauch extrudiert, in eine Blasformwerkzeuganordnung eingebracht, über einen Blasdorn durch Überdruck aufgeblasen und ausgehärtet. Die dafür eingesetzten Extrusionsblasmaschinen besitzen in der Regel wenigstens einen Extruder zur Zuführung des Kunststoffmaterials. Der Ausgang des Extruders ist mit dem Extruderkopf verbunden, an dessen vorzugsweise in der Öffnungsweite regulierbarer Austrittsdüse der ein oder mehrschichtig extrudierte Schlauch austritt. Der extrudierte Kunststoffschlauch kann ein- oder mehrschichtig sein, er kann als Schlauch mit Sichtstreifen, Dekorstreifen oder bezogen auf den Umfang mit mehreren, beispielsweise verschiedenfarbigen, Segmenten extrudiert sein. Der extrudierte Schlauch wird an eine Blasformwerkzeuganordnung übergeben und mit Hilfe eines in den Formhohlraum eingefahrenen Blasdorns durch Überdruck aufgeblasen. Danach wird aufgeblasene Kunststoffbehälter aus der Formkavität entformt.

Die je Zeiteinheit bzw. je Zyklus herstellbare Anzahl von Kunststoffbehältern wirkt sich unmittelbar auf die Wirtschaftlichkeit des Herstellprozesses, auf die Herstellkosten des einzelnen Behälters und damit auf die Amortisation des Blasformwerkzeugs und der Herstellanlage aus. Der Einfluss des Mengenfaktors ist umso grösser, je kleiner der herzustellende Kunststoffbehälter ist. Aus diesem Grund sind auch schon Extrusionsblasanlagen bekannt, bei denen die Blasformwerkzeuganordnung je Extrusionsdüse eine Doppelkavität aufweist. Dabei besteht die Doppelkavität aus zwei axial untereinander angeordneten Formkavitäten, die an den Mündungen der aufzublasenden Behälter miteinander in Verbindung stehen. Ein in einer Bohrung des Blasformwerkzeugs geführter Blasdorn ist lateral auf den Bereich der aneinandergrenzenden Mündungen der Blasformkavitäten zustellbar. Der Blasdorn durchdringt die Wandung des Kunststoffschlauchs in einem die beiden Mündungen verbindenden Mittenbereich und bläst aus einem in die Doppelkavität eingelegten Kunststoffschlauch in einem Zyklus zwei Behälter auf. Die fertig aufgeblasenen Behälter werden dann aus den Blasformkavitäten entformt.

Zur Entformung der fertig aufgeblasenen Kunststoffbehälter, insbesondere Kunststoffflaschen sind in der Blasformwerkzeuganordnung Ausstosser vorgesehen. Die Ausstosser sind in den Peripheriebereichen der Blasformwerkzeuganordnung angeordnet und greifen üblicherweise in einem Abschnitt des Kunststoffbehälters an, der an dessen Bodenbereich angrenzt. Dabei kann es vorkommen, dass die Ausstosser in der Wandung der noch nicht vollständig ausgehärteten Kunststoffbehälter Abdrücke hinterlassen. Derartige Abdrücke sind an den Kunststoffbehältern aber unerwünscht. Einerseits beeinflussen sie das Erscheinungsbild der Kunststoffbehälter negativ. Andererseits können die Abdrücke, je nach ihrer Tiefe und der Wandstärke der Kunststoffbehälter, auch unerwünschte Schwächungsbereiche darstellen.

Aus der US-A-5,372,495 ist eine Blasformwerkzeuganordnung bekannt, die zwei Blasformhälften umfasst, welche eine Formkavität begrenzen. In einem der Kavitätsmündung zugewandten Klemmabschnitt der Blasformhälften sind in einander auf gleicher Höhe gegenüberliegenden Bohrungen Klemm-/ Auswurfstössel angeordnet. Bei geschlossenen Blasformhälften wird ein eingelegter Kunststoffschlauch von den Klemm-/ Auswurfstösseln geklemmt. Der Kunststoffschlauch wird über einen unterhalb des Klemm-/Auswurfstössels angeordneten, in die Formkavität einfahrbaren Blasdorn mit Überdruck gemäss der Formkavität zu einem Kunststoffbehälter aufgeblasen. Beim Öffnen der Blasformhälften bleibt der Kunststoffschlauch von den Klemm-/ Auswurfstösseln geklemmt, die dabei gegenüber den Blasformtrennflächen ausgefahren werden. Dadurch, dass der oberhalb an den Halses des Kunststoffbehälters anschliessenden Schlauchabschnitt beim Öffnen der Blasform gehalten wird, wird der Behälter aus der Formkavität ausgestossen. Durch Zurückziehen der Klemm-/ Auswurfstössel in die Blasformhälften wird der Behälter schliesslich freigegeben und die Formkavität kann mit einem neuen extrudierten Kunststoffschlauchstück beschickt werden. Die Klemm-/ Auswurfstössel berühren einen Abschnitt des Kunststoffschlauchs, der vom Behälterhals abgetrennt wird. Abdrücke auf dem Behälter werden dadurch vermieden.

Aus der EP 0 633 123 ist die Herstellung einer Kunststofftube aus einem extrudierten Kunststoffschlauch bekannt. Insbesondere sind dort auch Tuben dargestellt, die spiegelsymmetrisch zueinander und an ihren Mündungsbereichen zusammenhängend angeordnet und über einen Mittelabschnitt miteinander verbunden hergestellt werden. Der Mittelabschnitt wird abgetrennt, um die einzelnen Tuben zu erhalten.

Aufgabe der vorliegenden Erfindung ist es daher, eine Blasformwerkzeuganordnung für eine Extrusionsblasmaschine dahingehend zu verbessern, dass an den fertig geblasenen und entformten Kunststoffbehältern keine Abdrücke von Ausstossern und dergleichen Entformungshilfen zurückbleiben. Insbesondere soll dazu die Kraft, mit der die Ausstosser auf den Angriffsbereich des aufgeblasenen Schlauchs einwirken, verringert werden können.

Die Lösung dieser Aufgabe besteht in einer Blasformwerkzeuganordnung für eine Extrusionsblasmaschine für Kunststoffbehälter, insbesondere für Kunststoffflaschen, welche die im kennzeichnenden Abschnitt des Patentanspruchs 1 aufgelisteten Merkmale aufweist. Bevorzugte Ausführungsvarianten und/oder Weiterbildungen der Erfindung sind Gegenstand der abhängigen Patentansprüche.

Eine Blasformwerkzeuganordnung für eine Extrusionsblasmaschine für Kunststoffbehälter, insbesondere für Kunststoffflaschen, besitzt zwei oder mehrere Blasformteile, die aus einer Offen- in eine Schliessposition bewegbar sind und umgekehrt. Die Blasformteile begrenzen im geschlossenem Zustand einen Formhohlraum, der wenigstens eine Zugangsöffnung für einen Blasdorn aufweist. Die Blasformwerkzeuganordnung ist mit einer Ausstossvorrichtung zur Entformung des aus einem Kunststoffschlauch gemäss dem Formhohlraum durch Überdruck aufgeblasenen Kunststoffbehälters ausgestattet. Die Ausstossvorrichtung umfasst wenigstens zwei Ausstosskolben, die in einander gegenüberliegenden Bohrungen einander gegenüberliegender Blasformteile geführt sind und beim Ausstossen lateral gegenüber der Forminnenwandung ausfahrbar sind, dass sie beim Ausstossen den Kunststoffschlauch in einem verlorenen Abschnitt berühren. Dabei sind in jedem Blasformteil zwei Ausstosskolben vorgesehen, die in Bohrungen geführt sind, die auf gleicher Höhe des Blasformteils und parallel zueinander verlaufen.

Zur Gewährleistung einer sicheren und raschen Entformung der aufgeblasenen Behälter sind in jeder Blasformhälfte zwei Ausstosskolben vorgesehen. Die Ausstosskolben sind dabei in Bohrungen in der jeweiligen Blasformhälfte geführt. Sie verlaufen etwa auf gleicher Höhe der Blasformhälfte und im wesentlichen parallel zueinander. Durch das Vorsehen mehrerer Ausstosskolben kann die Kraft, mit der ein einzelner Kolben auf den Angriffsbereich des aufgeblasenen Schlauchs einwirkt, verringert werden.

Die erfindungsgemässe Anordnung der Ausstossvorrichtung ist insbesondere bei Blasformwerkzeuganordnungen von Vorteil, bei denen die Blasformteile einen Formhohlraum umschliessen, der aus mehreren axial untereinander angeordneten Blasformkavitäten zusammengesetzt ist, wobei jeweils zwei der Blasformkavitäten Doppelkavitäten bilden und an ihren Mündungsbereichen zusammenhängend angeordnet und über einen Mittelabschnitt miteinander verbunden sind. Eine Zugangsöffnung für den Blasdorn ist im Bereich dieses Mittelabschnitts der Mündungsbereiche der Doppelkavität angeordnet.

Bei dieser Ausführungsvariante der Blasformwerkzeuganordnung ist der Blasdorn innerhalb einer Bohrung eines Blasformteils geführt verschiebbar angeordnet. Blasformwerkzeuganordnungen mit aus mehreren Blasformkavitäten zusammengesetzten Formhohlräumen kommen vor allem für die Herstellung von Kunststoffbehältern, insbesondere Kunststoffflaschen zum Einsatz, die eine gringere Höhe aufweisen. Nachdem auch derartige kleinere Kunststoffflaschen auf den konventionellen Extrusionsblasmaschinen gefertigt werden, steht die übliche Standardhöhe der Blasformwerkzeuganordnung zur Verfügung. Um die gesamte Höhe der Blasformwerkzeuganordnung auszunutzen, werden zwei oder auch mehrere Blasformkavitäten axial untereinander angeordnet. Im Fall eines wenigstens zwei zusammenhängende Kavitäten umfassenden Formhohlraums ist der Blasdorn innerhalb der Blasformwerkzeuganordnung geführt auf den Formhohlraum zustellbar. Falls der Formhohlraum auch noch eine weitere derart zusammenhängende Kavitäten aufweist, kann auch noch ein weiterer Blasdorn innerhalb einer weiteren Bohrung in der Blasformwerkzeuganordnung vorgesehen sein. Schliesst an die zusammenhängenden Kavitäten axial eine Einzelkavität an, so ist diese derart ausgerichtet, dass sie an der Oberfläche der Blasformwerkzeuganordnung eine Mündung aufweist, in die ein weiterer, freier Blasdorn einfahrbar ist. Blasformwerkzeuganordnungen, deren Formkavitäten aus zwei oder mehr Blasformkavitäten zusammengesetzt sind, bieten die Möglichkeit, bei nur verhältnismässig geringen Mehrkosten für das Werkzeug in einem Blaszyklus die doppelte, dreifache oder noch grössere Anzahl von Behältern herzustellen.

Bei Blasformwerkzeuganordnungen mit einer Doppelkavität ist die Ausstossvorrichtung mit Vorteil derart angeordnet, dass der Kunststoffschlauch beim Ausstossen im Mittelabschnitt zwischen den Mündungsbereichen der Einzelkavitäten berührt wird. Der Mittelabschnitt bildet dabei den verlorenen Abschnitt, der von den entformten Kunststoffbehältern abgetrennt wird. Der Mittelabschnitt zwischen den Mündungsbereichen der fertig geblasenen und entformten Kunststoffbehälter wird ohnehin von den Behältern abgetrennt. Nachdem die Ausstossvorrichtung beim Ausstossvorgang gerade im Mittelabschnitt angreift, können allfällige Abdrücke nur dort auftreten. Die Kunststoffbehälter sind nach dem Abtrennen des Mittelabschnitts frei von irgenwelchen derartige Abdrükken der Ausstossvorrichtung.

Wegen des einfacheren Aufbaus und der insgesamt einfacheren Bewegungsabläufe ist die Blasformwerkzeuganordnung mit Vorteil aus nur zwei Blasformhälften aufgebaut. Die Ausstosskolben der Ausstossvorrichtung sind jeweils in parallelen Bohrungen in den ein-ander gegenüberliegenden Blasformhälften geführt. Eine derartige Anordnung weist eine verhältnismässig einfache Bauweise auf. Die Bewegungsabläufe für das Öffnen und Schliessen der Blasformhälften und die Betätigung der Ausstosskolben sind unkompliziert und einfach steuerbar. Beim Öffnen des Werkzeuges werden die Behälter in der axial zur Blasdüse ausgerichteten "Mittellage" belassen. Dadurch wird eine Beschädigung der Behälter vermieden und der an die obere Flasche anschliessende extrudierte Schlauch in einer neutralen Position gehalten.

Aus konstruktiven Überlegungen und damit der Mittelabschnitt zwischen den Mündungsbereichen der die Doppelkavität ausmachenden Blasformkavitäten möglichst kurz gehalten werden kann, erweist es sich von Vorteil, wenn die Bohrungen für die Ausstosskolben in einer der Formhälften auf gleicher Höhe und parallel zu der Bohrung für den Blasdorn verlaufen. Die Bohrungen für die Ausstosskolben in der gegenüberliegenden Formhälfte sind ebenfalls in vergleichbarer Höhe der Formhälfte angeordnet.

Die Ausstossvorrichtung ist mit Vorteil pneumatisch oder hydraulisch betätigbar. Dies erlaubt eine gute Kontrollier- und Dosierbarkeit des Ausstossdruckes. Insbesondere bei Mehrfachwerkzeugen mit einer grossen Anzahl von nebeneinander angeordneten Formhohlräumen mit Doppelkavitäten wird dadurch der konstruktive und steuerungstechnische Aufwand deutlich verringert. Ein Kopplung der Steuerungskanäle für die hydraulische bzw. pneumatische Betätigung der Ausstossvorrichtungen sorgt dabei für einen Ausgleich von Fertigungstoleranzen und von mechanischem Spiel.

Weitere Vorteile und zweckmässige Ausgestaltungen der Erfindung ergeben sich aus der nachstehenden Beschreibung unter Bezugnahme auf die nicht massstabsgetreuen, schematischen Darstellungen. Es zeigen:
- Fig. 1: ein Schema einer Blasformwerkzeuganordnung mit angedeutetem Extruderkopf und einem zusätzlichen Blasdorn;
- Fig. 2: die Blasformwerkzeuganordnung gemäss Fig. 1 mit angedeuteten Ausstossern; und
- Fig. 3: eine Schnittdarstellung der Blasformwerkzeuganordnung.

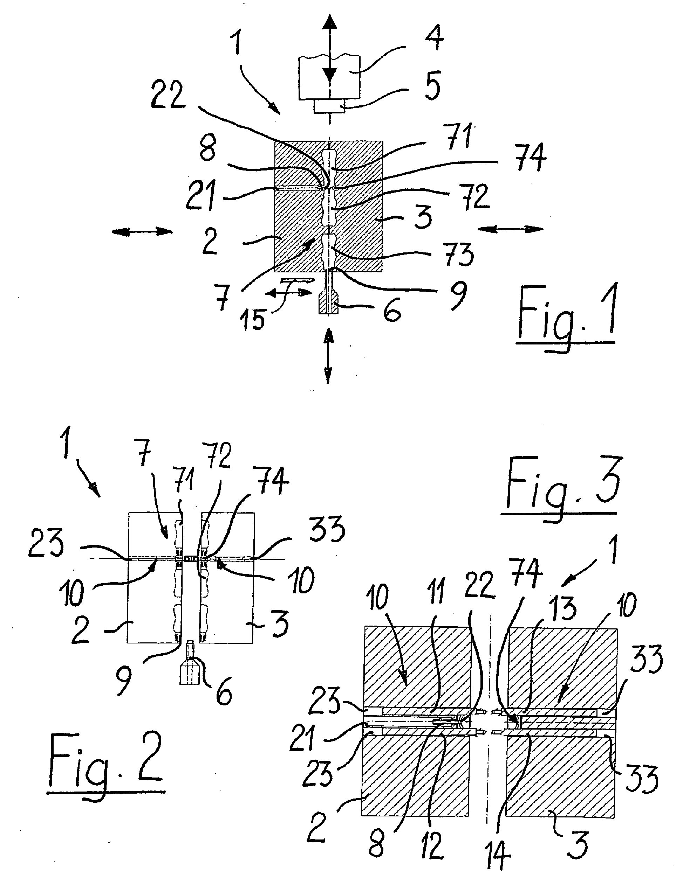

Fig. 1 zeigt schematisch eine Anordnung der für die Erläuterung der Erfindung wesentlichen Gerätekomponenten einer Extrusionsblasanlage. Bei der dargestellten Extrusionsblasanlage handelt es sich dabei insbesondere um eine neuartige, sogenannte Linearextrusionsblasanlage, bei der der extrudierte Kunststoffschlauch während des gesamten Blaszykluses geführt ist. Die exakte Funktion dieser Linearanlage ist jedoch für die Erfindung nicht näher von Bedeutung. Interessierte Kreise seien diesbezüglich aber auf die PCT-Anmeldung Nr. PCT/CH2004/00047 verwiesen.

In der schematischen Darstellung der Fig. 1 bezeichnet das Bezugszeichen 4 einen Extruderkopf, der die Extrusionsdüse 5 aufweist. Der über einen Extruder zugeführte erweichte Kunststoff wird durch die Extrusionsdüse 5 des Extruderkopfes 4 als ein oder mehrschichtiger Schlauch extrudiert. Das Bezugszeichen 1 steht für ein Blasformwerkzeuganordnung, welche den extrudierten Kunststoffschlauch übernimmt. Gemäss dem dargestellten Ausführungsbeispiel umfasst die Blasformwerkzeugeinrichtung zwei Blasformhälften 2, 3, die einen Formhohlraum 7 begrenzen. Der Formhohlraum 7 ist dabei aus mehreren axial untereinander angeordneten Blasformkavitäten 71, 72, 73 zusammengesetzt. Zwei der gemäss dem dargestellten Ausführungsbeispiel insgesamt drei Blasformkavitäten 71, 72 sind derart zueinander angeordnet, dass ihre Mündungsbereiche ineinander übergehen. Die Mündungsbereiche der Einzelkavitäten 71, 72 sind dabei durch einen Mittelabschnitt 74 miteinander verbunden. Eine dritte, einzelne Blasformkavität 73 ist durch einen Abquetschbereich vom Boden der vorhergehenden Blasformkavität 72 getrennt und besitzt eine Mündung 9 an der von der Extruderdüse 5 abgewandten Seite der Blasformwerkzeuganordnung 1. Geht man von der praxisgerechten Anordnung der Gerätekomponenten aus, dann befindet sich die Mündung 9 der einzelnen Blasformkavität 73 an der Unterseite der Blasformwerkzeuganordnung 1. Ein mit dem Bezugszeichen 6 bezeichneter sogenannter freier Blasdorn ist in die Mündung 9 der einzelnen Blasformkavität 73 einfahrbar. Die Blasformwerkzeuganordnung 1 besitzt eine Bohrung 21 auf, die im Bereich des Mittelabschnitts 74 eine Öffnung 22 aufweist. Ein in der Bohrung 21 lateral verschiebbarer Blasdorn 8 ist durch die Öffnung 22 im Mittelabschnitt 74 auf die Doppelkavität 71, 72 zustellbar.

Der Extruderkopf 4 und die Blasformwerkzeuganordnung 1 sind bei den dargestellten Ausführungsbeispiel derart angeordnet, dass die Achse der Blasformkavität 7 und der Ausgang der Extrusionsdüse 5 am Extruderkopf 4 miteinander axial fluchten. Bei dem dargestellten Ausführungsbeispiel ist auch der freie Blasdorn 6 derart angeordnet, das er mit der Achse des beispielsweise dreiteilig aufgebauten Formhohlraums 7 fluchtet. Dies ist jedoch kein zwingendes Erfordernis. Es versteht sich, dass bei einer exzentrisch angeordneten Mündung der einzelnen Blasformkavität 73 der freie Blasdorn 6 auch entsprechend seitlich versetzt sein kann. Mit dem Bezugszeichen 15 ist noch ein Messer angedeutet, dass zur Abtrennung der fertig geblasenen Hohlkörperanordnung vom extrudierten Schlauch dient.

Die in Fig. 2 eingezeichneten Pfeile deuten die Verstellbarkeit der einzelnen Gerätekomponenten an. So ist der Extruderkopf 4 im wesentlichen nur bezüglich seiner Höhe verstellbar, um während des Extrusions- und Blasvorgangs den Abstand zur Blasformwerkzeuganordnung 1 zu verändern. Für die erforderliche Grundeinstellung und Feinjustierung weist er jedoch alle Freiheitsgrade auf: Die Blasformhälften 2, 3 der Blasformwerkzeuganordnung 1 sind nur lateral aus einer Offen-Endstellung in eine Geschlossen-Endstellung und umgekehrt verstellbar. In einer Variante der Extrusionsblasanlage kann auch eine Höhenverstellbarkeit für die Blasformwerkzeuganordnung 1 vorgesehen sein. Der in der Bohrung 21 geführte Blasdorn 8 ist auf Höhe des Mittelabschnitts des Blasformkavitätenpaars 71, 72 angeordnet. Der freie Blasdorn 6 ist höhenverstellbar, um in die Mündung 9 der einzelnen Blasformkavität 73 eingefahren und wieder zurückgezogen werden zu können.

Die dargestellte Blasformwerkzeuganordnung mit mehreren, insbesondere drei, axial untereinander angeordneten Blasformkavitäten kann beispielsweise auch Bestandteil einer Extrusionsblasvorrichtung sein, bei der die Blasformwerkzeuganordnung nach der Übernahme des extrudierten Schlauchs seitlich wegbewegbar und in eine Blasstation transportierbar ist. Im Fall derartiger konventioneller Extrusionsblasanlagen kann die dritte, einzelne Blasformkavität ihre Mündung auch an der Oberseite der Blasformwerkzeuganordnung aufweisen. Der für die dritte Blasformkavität vorgesehene freie Blasdorn wird dann von oben auf die Mündung der dritten Blasformkavität zugestellt. Die beiden mit ihren Mündungen zusammenhängenden Blasformkavitäten werden jedoch immer von einem innerhalb einer Bohrung der Blasformwerkzeuganordnung in der Höhe des Mittelabschnitts der paarweise angeordneten Blasformkavitäten lateral zustellbaren, geführten Blasdorn beaufschlagt.

Fig. 2 und 3 zeigen, dass die Blasformwerkzeuganordnung gemäss der Erfindung mit Ausstossern 10 ausgestattet ist, die beim Öffnen der Formhälften 2, 3 gegenüber der Forminnenwandung ausfahrbar sind und die Entformung der fertig geblasenen Kunststoffbehälter, insbesondere Kunststoffflaschen erleichtern. Die Ausstosser 10 sind in Bohrungen 23, 33 in den Formhälften 2, 3 geführt. Die Ausstosser 10 sind derart angeordnet, dass sie die fertig geblasenen Kunststoffbehälter Flaschen nur im Mittelabschnitt 74, zwischen den Mündungsbereichen der zusammenhängenden Blasformkavitäten 71, 72 berühren. Der Mittelabschnitt zwischen den Mündungsbereichen wird nach dem Entformen abgetrennt. Dadurch sind an den fertig geblasenen Kunststoffbehältern mit Sicherheit keine Druckstellen von den Ausstossern 10 sichtbar.

Eine vorteilhafte Ausführungsvariante der Erfindung sieht vor, dass die Ausstosser 10 in den Blasformhälften 2, 3 von Ausstosskolben 11, 12 bzw. 13, 14 gebildet sind, die paarweise in um wesentlichen parallel verlaufenden Bohrungen 23 bzw. 33 der jeweiligen Blasformhälfte 2, bzw. 3 lateral verschiebbar angeordnet sind. Die Bohrungen 23, 33 in den Blasformhälften 2, 3 befinden sich dabei etwa auf gleicher Höhe der Blasformhälften 2, 3. Wie aus Fig. 3 ersichtlich ist, verlaufen in die Bohrungen 23 in der Blasformhälfte 2 zu beiden Seiten der Bohrung 21 für den Blasdorn 8 und etwa auf gleicher Höhe der Blasformhälfte 2. Die Ausstosskolben 11 - 14 sind vorzugsweise hydraulisch oder pneumatisch betätigbar. Dabei ist es zweckmässig, wenn die Steuerkanäle für die hydraulische bzw. pneumatische Betätigung der Ausstossvorrichtungen 10 untereinander gekoppelt sind.

Die Erfindung wurde in den schematischen Zeichungen am Beispiel einer Blasformwerkzeuganordnung mit nur einem Formhohlraum dargestellt. Es versteht sich, dass die geschilderte Anordnung auch bei Mehrfachblasformwerkzeugen oder Anordnungen von Einfach- und/oder Mehrfachblasformwerkzeugen anwendbar ist. Die Zahl der Blasdorne ist dabei auf die Anzahl der Blasformkavitäten abgestimmt. Fall mehrere Doppelkavitäten axial untereinander angeordnet sind, kann es zweckmässig sein, für jede Doppelkavität Ausstossvorrichtungen vorzusehen, deren Angriffspunkte jeweils in den Mittelabschnitten zwischen den Mündungsbereichen der zusammenhängenden Blasformkavitäten angeordnet sind.

## Patentansprüche

1. Blasformwerkzeuganordnung für eine Extrusionsblasmaschine für Kunststoffbehälter, insbesondere für Kunststoffflaschen, umfassend zwei oder mehrere Blasformteile (2, 3), die aus einer Offen- in eine Schliessposition bewegbar sind und umgekehrt und in geschlossenem Zustand einen Formhohlraum (7) begrenzen, der wenigstens eine Zugangsöffnung (22) für einen Blasdorn (8) aufweist, und mit einer Ausstossvorrichtung (10) zur Entformung des aus einem Kunststoffschlauch gemäss dem Formhohlraum (7) durch Überdruck aufgeblasenen Kunststoffbehälters, die wenigstens zwei Ausstosskolben (11-14) umfasst, die in einander gegenüberliegenden Bohrungen (23, 33) einander gegenüberliegender Blasformteile (2, 3) geführt sind und beim Ausstossen lateral gegenüber der Forminnenwandung ausfahrbar sind, dass sie beim Ausstossen den Kunststoffschlauch an einem verlorenen Abschnitt berühren, **dadurch gekennzeichnet, dass** in jedem Blasformteil (2 bzw. 3) zwei Ausstosskolben (11,12 bzw. 13, 14) vorgesehen sind, die in Bohrungen (23, 33) geführt sind, die auf gleicher Höhe des Blasformteils (2 bzw. 3) und parallel zueinander angeordnet sind.

2. Blasformwerkzeuganordnung nach Anspruch 1, **dadurch gekennzeichnet, dass** die Blasformteile (2, 3) einen Formhohlraum (7) umschliessen, der aus mehreren axial untereinander angeordneten Blasformkavitäten (71, 72, 73) zusammengesetzt ist, wobei jeweils zwei der Blasformkavitäten (71, 72) Doppelkavitäten bilden und an ihren Mündungsbereichen zusammenhängend angeordnet und über einen Mittelabschnitt (74) miteinander verbunden sind, und dass eine Zugangsöffnung (22) für den Blasdorn (8) im Mittelabschnitt (74) zwischen den Mündungen der Doppelkavitäten (71, 72) angeordnet ist, wobei der Blasdorn (8) innerhalb einer Bohrung (21) eines der Blasformteile (2) geführt verschiebbar angeordnet ist.

3. Blasformwerkzeuganordnung nach Anspruch 2, **dadurch gekennzeichnet, dass** die Ausstossvorrichtung (10) auf Höhe des Mittelabschnitts (74) angeordnet ist.

4. Blasformwerkzeuganordnung nach einem der vorangehenden Ansprüche, **dadurch gekennzeichnet, dass** die Blasformteile Blasformhälften (2, 3) sind.

5. Blasformwerkzeuganordnung nach Anspruch 4, **dadurch gekennzeichnet, dass** die Bohrungen (23, 33) für die Ausstosskolben (11-14) in einer der Formhälften (2) auf gleicher Höhe und parallel zu der Bohrung (21) für den Blasdorn (8) verlaufen.

6. Blasformwerkzeuganordnung nach Anspruch 5, **dadurch gekennzeichnet, dass** die Bohrung für den Blasdorn (8) zwischen den Bohrungen (23) für die beiden Ausstosskolben (11, 12) angeordnet ist.

7. Blasformwerkzeuganordnung nach einem der vorangehenden Ansprüche, **dadurch gekennzeichnet, dass** die Ausstossvorrichtung (10) pneumatisch oder hydraulisch betätigbar ist.

8. Blasformwerkzeuganordnung nach einem der vorangehenden Ansprüche, **dadurch gekennzeichnet, dass** es sich um ein Mehrfachwerkzeug mit einer Anzahl von nebeneinander angeordneten Formhohlräumen (7) handelt, wobei jeder Formhohlraum (7) aus mehreren axial untereinander angeordneten Blasformkavitäten (71, 72, 73) zusammengesetzt ist und zwei Blasformkavitäten (71, 72) umfasst, die Doppelkavitäten bilden und an ihren Mündungsbereichen zusammenhängend angeordnet und über einen Mittelabschnitt (74) miteinander verbunden sind, und für jeden Formhohlraum (7) eine Ausstossvorrichtung (10) vorgesehen ist, die in einander gegenüberliegenden Blasformteilen (2, 3) jeweils zwei parallel verlaufende und auf gleicher Höhe angeordnete Ausstosskolben (11, 12 bzw. 13, 14) umfasst.

9. Blasformwerkzeuganordnung nach Anspruch 8, **dadurch gekennzeichnet, dass** die Steuerkanäle für die hydraulische bzw. pneumatische Betätigung der Ausstossvorrichtungen (10) untereinander gekoppelt sind.

## Claims

1. A blow mould tool arrangement for an extrusion blow machine for plastic containers, in particular plastic bottles, comprising two or more blow mould parts (2, 3) which are movable from an opening position into a closure position and vice versa, and in the closed condition delimit a mould cavity (7) which comprises at least one access opening (22) for a blow mandrel (8), and with an ejection device (10) for the mould-removal of the plastic container which is blown up out of a plastic tubing according to the mould cavity (7) by way of excess pressure, said ejection device comprising at least two ejection pistons (11-14) which are led in oppositely lying bores (23, 33) of blow mould parts (2, 3) which lie opposite one another, and on ejection may be extended laterally with respect to the inner wall of the mould, that on ejecting they contact the plastic tubing at a lost section, **characterised in that** two ejection pistons (11, 12 or 13; 14) are provided in each blow mould part (2 or 3), which are led in bores (23, 33) which are arranged parallel to one another at the same height of the blow mould part (2 or 3).

2. A blow mould tool arrangement according to claim 1, **characterised in that** the blow mould parts (2, 3) enclose a mould cavity (7) which is composed of several blow mould cavities (71, 72, 73) which are arranged axially below one another, wherein in each case two of the blow mould cavities (71, 72) form double cavities and are coherently arranged at their run-out regions and are connected to one another via a middle section (74), and that an access opening (22) for the blow mandrel (8) is arranged in the middle section (74) between the run-outs of the double cavities (71, 72), wherein the blow mandrel (8) is arranged within the bore (21) of one of the blow mould parts (2) is a displaceably guided manner.

3. A blow mould tool arrangement according to claim 2, **characterised in that** the ejection device (10) is arranged at the height of the middle section (74).

4. A blow mould tool arrangement according to one of the preceding claims, **characterised in that** the blow mould parts are blow mould halves (2, 3).

5. A blow mould tool arrangement according to claim 4, **characterised in that** the bores (23, 33) for the ejection piston (11-14) in one of the mould halves (2) run at the same height and parallel to the bore (21) for the blow mandrel (8).

6. A blow mould tool arrangement according to claim 5, **characterised in that** the bore for the blow mandrel (8) is arranged between the bores (23) for the two ejection pistons (11, 12).

7. A blow mould tool arrangement according to one of the preceding claims, **characterised in that** the ejection device (10) is actuatable in a pneumatic or hydraulic manner.

8. A blow mould tool arrangement according to one of the preceding claims, **characterised in that** it is the case of a multiple tool with a number of mould cavities (7) which are arranged next to one another, wherein each mould cavity (7) is composed of several blow mould cavities (71, 72, 73) which are arranged axially below one another and comprises two blow mould cavities (71, 72) which form double cavities and are arranged coherently at their run-out regions and are connected to one another via a middle section (74), and an ejection device (10) is provided for each mould cavity (7), said ejection device in blow mould parts (2, 3) lying opposite one another, in each case comprises two ejection pistons (11, 12 or 13, 14) which run parallel and are arranged at the same height.

9. A blow mould tool arrangement according to claim 8, **characterised in that** the control channels for the hydraulic or pneumatic actuation of the ejection devices (10) are coupled amongst one another.

## Revendications

1. Arrangement d'outil de moule de soufflage pour une machine d'extrusion-soufflage pour récipients en plastique, en particulier pour bouteilles en plastique, comprenant deux ou plusieurs pièces de moules de soufflage (2, 3) qui sont mobiles d'une position ouverte en une position de fermeture et vice-versa et qui délimitent, à l'état fermé, un espace creux de moule (7) qui présente au moins une ouverture d'accès (22) pour un mandrin de soufflage (8) et avec un dispositif d'éjection (10) pour déformer le récipient en plastique soufflé à partir d'un tuyau flexible en plastique selon l'espace creux de moulage (7) par surpression qui comprend au moins deux pistons d'éjection (11-14) qui sont guidés dans des forures opposées l'une à l'autre (23, 33) de pièces de moule de soufflage opposées l'une à l'autre (2, 3) et qui peuvent sortir, lors de l'éjection, latéralement par rapport à la paroi intérieure du moule de telle manière que, lors de l'éjection, ils touchent le tuyau flexible en plastique sur une section perdue, **caractérisé en ce que** deux pistons d'éjection (11, 12 ou 13, 14) sont prévus dans chaque pièce de moule de soufflage (2 ou 3), pistons qui sont guidés dans des forures (23, 33) qui sont placées au même niveau de la pièce de moule de soufflage (2 ou 3) et parallèlement l'un à l'autre.

2. Arrangement d'outil de moule de soufflage selon la revendication 1, **caractérisé en ce que** les pièces de moule de soufflage (2, 3) enferment un espace creux de moulage (7) qui est composé de plusieurs cavités de moule de soufflage (71, 72, 73) placées axialement l'une au-dessous de l'autre, respectivement deux des cavités de moule de soufflage (71, 72) formant des cavités doubles et étant placées en communiquant sur leurs zones d'embouchure et étant reliées l'une à l'autre par une section centrale (74) et qu'une ouverture d'accès (22) pour le mandrin de soufflage (8) est placée dans la section centrale (74) entre les embouchures des cavités doubles (71, 72), le mandrin de soufflage (8) étant placé déplaçable en étant guidé à l'intérieur d'une forure (21) de l'une des pièces de moule de soufflage (2).

3. Arrangement d'outil de moule de soufflage selon la revendication 2, **caractérisé en ce que** le dispositif d'éjection (10) est placé à la hauteur de la section centrale (74).

4. Arrangement d'outil de moule de soufflage selon l'une des revendications précédentes, **caractérisé en ce que** les pièces de moule de soufflage sont des moitiés de moule de souffalge (2, 3).

5. Arrangement d'outil de moule de soufflage selon la revendication 4, **caractérisé en ce que** les forures (23, 33) pour les pistons d'éjection (11-14) sont dans l'une des moitiés de moule (2) à la même hauteur et parallèlement à la forure (21) pour le mandrin de soufflage (8).

6. Arrangement d'outil de moule de soufflage selon la revendication 5, **caractérisé en ce que** la forure pour le mandrin de soufflage (8) est placée entre les forures (23) pour les deux pistons d'éjection (11, 12).

7. Arrangement d'outil de moule de soufflage selon l'une des revendications précédentes, **caractérisé en ce que** le dispositif d'éjection (10) peut être actionné pneumatiquement ou hydrauliquement.

8. Arrangement d'outil de moule de soufflage selon l'une des revendications précédentes, **caractérisé en ce qu'**il s'agit d'un outil multiple avec un nombre d'espaces creux de moulage placés l'un à côté de l'autre (7), chaque espace creux de moulage (7) étant composé de plusieurs cavités de moule de soufflage (71, 72, 73) placées axialement l'une au-dessous de l'autre et comprenant deux cavités de moule de soufflage (71, 72) qui forment des cavités doubles et qui sont placées tenant ensemble sur leurs zones d'embouchure et qui sont reliées ensemble par une section centrale (74) et un dispositif d'éjection (10) étant prévu pour chaque espace creux de moulage (7) qui comprend respectivement deux pistons d'éjection (11, 12 ou 13, 14) placés parallèlement et à la même hauteur dans des pièces de moule de soufflage opposées l'une à l'autre (2, 3).

9. Arrangement d'outil de moule de soufflage selon la revendication 8, **caractérisé en ce que** les canaux de commande pour l'actionnement hydraulique ou pneumatique des dispositifs d'éjection (10) sont couplés l'un à l'autre.
